# EUROPEAN PATENT APPLICATION

(11) **EP 1 832 959 A2**
(43) Date of publication of application: **12.09.2007**
(21) Application number: 07103593.5
(22) Date of filing: 06.03.2007
(51) Int. Cl.: G06F 3/023, H04M 1/725, G03B 7/12, G03B 17/38

(54) **Method of photographing using a mobile handset, and the mobile handset**

(30) Priority: 06.03.2006 US 779633 P; 09.05.2006 US 430639; 16.02.2007 KR 20070016804
(71) Applicant: Samsung Electronics Co., Ltd., Suwon-si Gyeonggi-do (KR)
(72) Inventor: Gloyd, Daniel Monteith c/o Samsung Electronics Co., Ltd., Gyeonggi-do (KR); Fogel, Gregory Scott c/o Samsung Electronics Co., Ltd., Gyeonggi-do (KR); Levin, Jennifer Marie c/o Samsung Electronics Co., Ltd., Gyeonggi-do (KR)
(74) Representative: Zimmer, Franz-Josef

(57) **Abstract**

A mobile handset having a camera is provided. The mobile handset includes a touch-sensitive keypad having a plurality of keys, a first component operable in response to one of the keys being touched to provide a first response related to using the camera, and a second component operable in response to one of the keys being pressed to provide a second response related to using the camera.

## Description

### BACKGROUND OF THE INVENTION

Electronic devices such as mobile, portable, wireless telephones, personal digital assistants (PDAs), handheld games, handheld computers, and similar devices typically include a keyboard, keypad, or similar means of data input. Such devices will be referred to herein as handheld devices or as mobile handsets. A key on the keypad of a handheld device can typically be in one of two states: a "down" or "active" or "pressed" state, which causes data to be entered into the device or an "up" or "neutral" or "not pressed" state in which data is not entered into the device.

In some cases, a single key can produce different inputs depending on how many times the key is pressed. For example, in a text messaging application, the "5" key on a telephone keypad can be used to input the letters "J", "K", or "L" or the number "5". If the "5" key is pressed once, a "J" might be entered, if the "5" key is pressed twice, a "K" might be entered, if the "5" key is pressed three times, an "L" might be entered, and if the "5" key is pressed four times, a "5" might be entered.

A scrolling function similar to that available on a mouse-equipped computer is not available on handheld devices. On a computer, rapid movement through a document or a list that appears on the computer's display might be accomplished by turning a wheel on a mouse or by using the mouse to manipulate a scroll bar on the computer's display, for example. Since such mechanisms are not available on a handheld device, rapid movement through the device's display is accomplished by rapid, repeated pressing of a key, such as a directional control or arrow key, on the handheld device's keypad.

### SUMMARY OF THE INVENTION

In one embodiment, a mobile handset having a camera is provided. The mobile handset includes a touch-sensitive keypad having a plurality of keys, a first component operable in response to one of the keys being touched to provide a first response related to using the camera, and a second component operable in response to one of the keys being pressed to provide a second response related to using the camera.

In another embodiment, a method of photography using a mobile handset having a camera is provided. The method includes viewing a subject to photograph on a display of the mobile handset, touching a key on the mobile handset to prepare the image for photographing, and pressing the key to photograph the subject.

In another embodiment, a mobile device having a camera and a keypad with keys having three states is provided. The mobile device comprises a plurality of keys provided in a first neutral state; a touch-sensitive component operable to detect a second state when one or more of the plurality of keys has been touched; a press detection component operable to detect a third state when the one or more of the plurality of keys has been pressed; a component operable in response to one of the keys being in a second state to provide a first response related to using the camera, the component operable in response to one of the keys being in a third state to provide a second response related to using the camera.

These and other features and advantages will be more clearly understood from the following detailed description taken in conjunction with the accompanying drawings and claims.

### BRIEF DESCRIPTION OF THE DRAWINGS

For a more complete understanding of the presentation and the advantages thereof, reference is now made to the following brief description, taken in connection with the accompanying drawings in detailed description, wherein like reference numerals represent like parts.
Figure 1 illustrates a touch-sensitive keypad system according to an embodiment of the present disclosure.
Figure 2 illustrates a handheld device that includes a touch-sensitive keypad system according to an embodiment of the present disclosure.
Figures 3a and 3b illustrate a display that might appear on a mobile telephone according to an embodiment of the present disclosure.
Figures 4a and 4b illustrate a display that might appear on a text messaging device according to an embodiment of the present disclosure.
Figure 5 illustrates a touch-sensitive 5-way keypad according to an embodiment of the present disclosure.
Figure 6a, 6b, and 6c illustrate a display of a camera viewfinder according to an embodiment of the present disclosure.
Figure 7 illustrates a menu configuration according to an embodiment of the present disclosure.
Figure 8 illustrates an alternative menu configuration according to an embodiment of the present disclosure.
Figure 9 illustrates a block diagram of a mobile device operable for some of the various embodiments of the present disclosure.

### DETAILED DESCRIPTION OF THE PREFERRED EMBODIMENTS

It should be understood at the outset that although an exemplary implementation of one embodiment of the present invention is illustrated below, the present system may be implemented using any number of techniques, whether currently known or in existence. The present disclosure should in no way be limited to the exemplary implementations, drawings, and techniques illustrated below, including the exemplary design and implementation illustrated and described herein, but may be modified within the scope of the appended claims along with their full scope of equivalents.

### TOUCH-SENSITIVE KEYPAD

Embodiments of the present disclosure provide for touch-sensitive keys on handheld devices. Contacting, but not pressing, a touch-sensitive key can create an input into a handheld device. Pressing a touch-sensitive key can cause the same response that would occur with the press of a traditional key. That is, in addition to the traditional "neutral" and "pressed" states that were previously available for a key, an intermediate state, which can be referred to as the "touched" state, is available wherein the key is touched but not pressed. A device might exhibit one type of behavior when a key is in the "touched" state and another type of behavior when that key is in the "pressed" state.

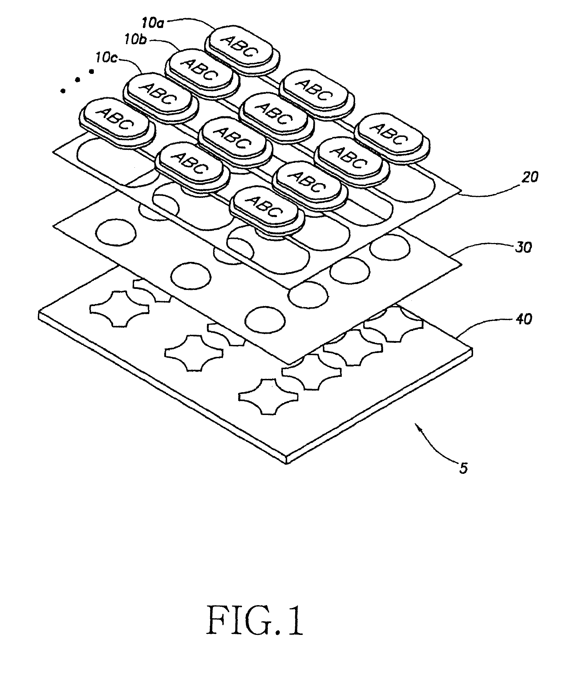

Figure 1 illustrates an embodiment of a system 5 for providing a "touched" state for the keys on a keypad. In this embodiment, a set of rigid key caps 10a, 10b, ... 10n is disposed above a capacitive touch-sensitive printed circuit board (PCB) 20. The capacitive touch-sensitive PCB 20 is disposed above a semi-rigid actuator plate 30. The semi-rigid actuator plate 30 is disposed above a snap dome PCB 40. The semi-rigid actuator plate 30 and the snap dome PCB 40 are components that might typically be present in traditional keypads. That is, the semi-rigid actuator plate 30 and the snap dome PCB 40 are used to determine when a key 10 has been pressed. The pressing of a key 10 might cause a downward movement in the semi-rigid actuator plate 30 and this downward movement might cause an electrical contact to occur in the snap dome PCB 40. The electrical contact can cause the creation of an input signal that corresponds to the key 10 that was pressed. One of skill in the art will be familiar with other components that can convert the pressing of a key into an input signal and that could be used instead of the semi-rigid actuator plate 30 and the snap dome PCB 40.

The capacitive touch-sensitive PCB 20 makes the keys 10 touch sensitive. That is, when a key 10 is touched, such as by a user's finger or some other device, the capacitive touch-sensitive PCB 20 can determine which key 10 has been touched and can generate an input signal corresponding to the touched key 10. In an embodiment, the capacitive touch-sensitive PCB 20 may use technology similar to that found in typical capacitive touch screens to detect when a key 10 has been touched.

As is well known in the art, a capacitive touch screen can sense a human or perhaps other touch and can cause an input signal to be generated when a touch is sensed. Electrical charges are typically stored in a material coating a capacitive touch screen panel and are drawn to the point of contact when the screen is touched. Hardware and software associated with the capacitive touch screen can detect the amount of charge present at a given location on the screen and can convert a change in charge level caused by a touch into an input signal that corresponds to the location that was touched.

In other embodiments, other types of technology could be used to detect a touch on a key 10. For example, instead of capacitive touch sensing, resistive touch sensing or ultrasonic surface wave touch sensing could be used. Alternatively, optical, heat, magnetic, or other types of sensors well known or after developed could be employed. Regardless of the touch sensing technology, the component 20 is capable of sensing when a key 10 has been touched and of converting the touching of a key 10 into a corresponding input signal that is delivered to a handheld device in which the keypad system 5 is present.

A key 10 in a touch-sensitive keypad system 5 is capable of generating two different input signals, one when the key 10 is in the "touched" state and another when the key 10 is in the "pressed" state. When a key 10 is not touched, the key 10 can be said to be in the "neutral" state as is the case for an untouched key in the prior art. Thus, a key 10 can be said to have three potential states: "neutral", "touched", where the key 10 is contacted but not pressed, and "pressed", where a downward force is exerted on the key 10. In an embodiment, a software module in a handheld device in which a touch-sensitive keypad system 5 is present is capable of receiving the two different input signals and causing different outcomes based on which signal is received. The software module might also cause an outcome related to a key 10 being in a neutral state.

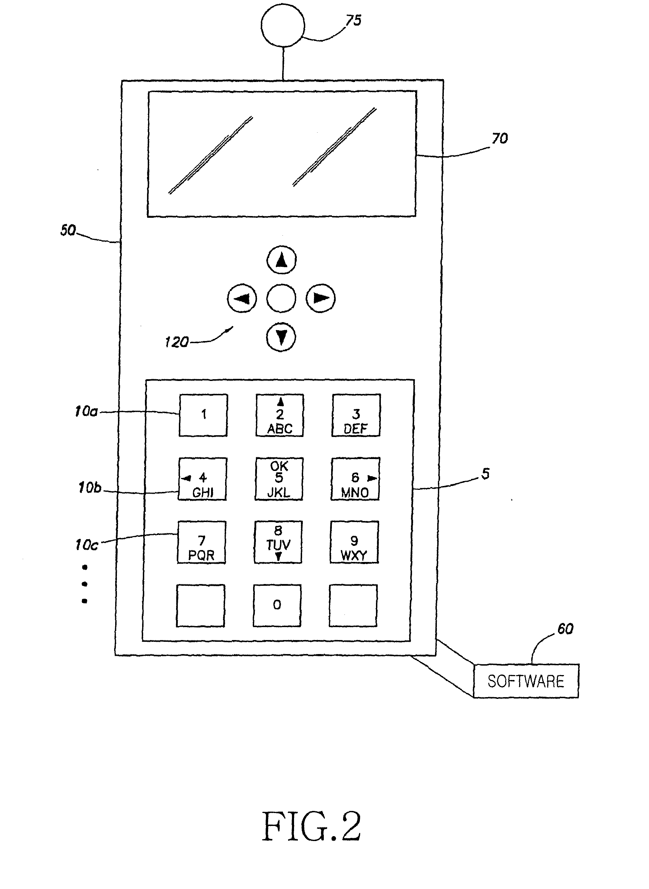

Figure 2 illustrates a generic handheld device 50, or just device 50, containing a touch-sensitive keypad 5. The device 50 might be a mobile telephone, PDA, handheld game, handheld computer, remote control, or similar device. A software module 60 in the device 50 receives one type of input when a key 10 is touched and another type of input when that key 10 is pressed. The software module 60 can then cause one type of behavior in the device 50 when a touch is detected and another type of behavior when a press is detected. The software module 60 might comprise software-based instructions implemented fully or partially by a central processor, firmware-based instructions implemented fully or partially by a field-programmable gate array or similar logic circuitry, or some other system for executing an algorithm for processing a touch on a key 10. The device 50 might also contain a display screen 70 and a touch-sensitive 5-way keypad 120, also known as a 5-way directional control keypad, as described below.

The generic handheld device 50 depicted in Figure 2 represents a preferred embodiment but it should be understood that in other embodiments touch-sensitive keys could be used in other types of devices. For example, touch-sensitive keys as described herein could be used in conjunction with desktop computer keyboards, desktop telephones, control panels, and other devices or systems containing push buttons. Thus, the terms "device" and "handheld device" as used herein refer to any device or system equipped with touch-sensitive keys. Also, the term "touch-sensitive key" should be understood to refer to any push button that is made sensitive to the touch and is not limited to referring to keys 10 in the configuration depicted in Figure 2.

Numerous applications can make use of the "touched" and "pressed" states available through touch-sensitive keys 10. For example, different displays might appear on the screen 70 of a device 50 depending on whether a key 10 is touched or pressed. Alternatively, touching a key 10 might cause a preliminary action to occur in a device 50 and pressing the touched key 10 might cause a follow-through to the preliminary action. Several applications that utilize touch-sensitive keys 10 are described below. Other applications or variations of these applications will be apparent to one of skill in the art in view of the present disclosure and are within the spirit and scope of the present disclosure.

### NUMBER DIALING WITH TOUCH SENSITIVE KEYPAD

In one embodiment, the device 50 might be a mobile telephone with a touch-sensitive keypad 5. When a user of the mobile telephone 50 touches a key 10, the numeral that appears on the key 10 might appear in large type on the display screen 70 of the mobile telephone 50. The user can look at the screen 70 and easily determine which key 10 is being touched. If the numeral that appears on the screen 70 corresponds to the number that the user wishes to enter, the user can then press the key 10 and the key press will be processed in the manner of a standard key press on a standard telephone. If the numeral that appears on the screen 70 does not correspond to the number that the user wishes to enter, the user can easily see that the wrong key 10 is being touched and can touch a different key 10 and again easily see if the correct key 10 is being touched.

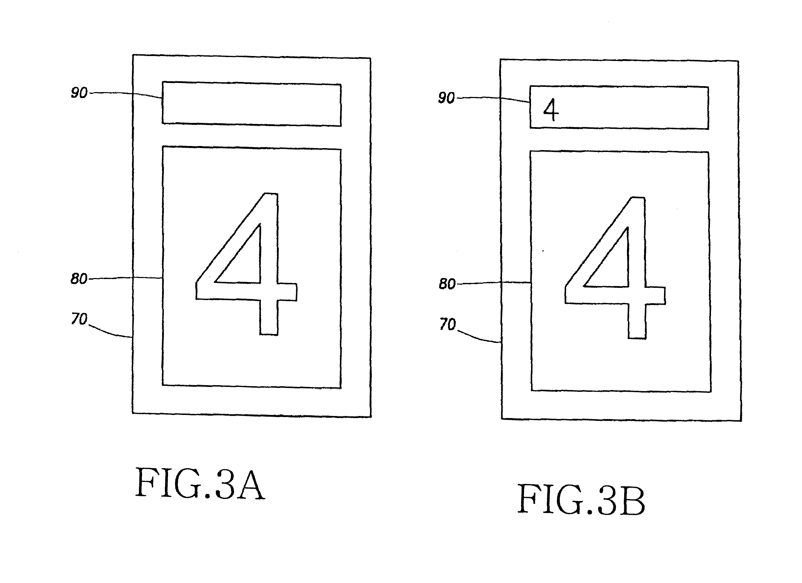

Figure 3a illustrates an embodiment of the display screen 70 on the device 50, where the device 50 is a mobile telephone equipped with a touch-sensitive keypad 5. In this case, a user is touching, but has not pressed, the "4" key on the keypad 5. As a result, a large numeral "4" appears in the central portion 80 of the screen 70. This clearly indicates to the user that a "4" will be entered if the "4" key being touched is subsequently pressed. If the user then presses the "4" key being touched, the screen 70 might take on the appearance shown in Figure 3b. A smaller sized "4" appears in the upper portion 90 of the screen 70 to indicate that a "4" has been entered. The larger "4" might remain in the central portion 80 of the screen 70 if the user retains contact with the "4" key.

As the user continues to touch and press other keys 10, a large-sized numeral indicating the key 10 currently being touched might appear in the central portion 80 of the screen 70 and the group of all numbers that have been entered might appear in the upper portion 90 of the screen 70 in the order in which they were entered. In other embodiments, other types of displays might be used to indicate which key 10 is being touched and which numbers have been entered. For example, the first portion 80 and the second portion 90 of the screen 70 could be different sizes or in different locations. Also, characters other than numbers could be present on the keys 10 and could appear in the first portion 80 and second portion 90 of the screen 70.

In this way, the user can move a finger across the keypad 5, look at the screen 70, see in a large sized font the number corresponding to the key 10 being touched, and then, if desired, press the key 10. The user does not need to look at the smaller sized numerals on the keypad 5 to see which number will be entered when a key 10 is pressed. The number of errors that occur during data entry can be reduced since a user can easily avoid pressing an incorrect key 10 by seeing the number that will be entered when a touched key 10 is pressed. The need to cancel one data entry sequence when an error occurs and begin a new sequence can be avoided. This can be especially helpful when the user is driving or performing other tasks where full attention cannot be given to the key pressing process.

### TEXT ENTRY WITH TOUCH SENSITIVE KEYPAD

In another embodiment, the device 50 is a text messaging device equipped with the touch-sensitive keypad 5. In this case, when a user touches a particular one of the keys 10, all of the characters that can be entered by pressing that key 10 might appear on the screen 70 of the device 50. For example, if the user touches the "5" key, the characters "J", "K", "L", and "5" might appear on the screen 70. The user can easily see which characters can be entered if the touched key 10 is pressed and can also easily see how many key presses are required to enter a desired character.

Under prior art text messaging protocols, a "time-out" period might be used to distinguish how two consecutive presses on a single key are interpreted. Two consecutive presses of a key within the time-out period might be interpreted as the selection of the second character in a list of characters. A first press of a key, followed by the expiration of the time-out period, followed by a second press of the same key might be interpreted as two consecutive selections of the first character in a list of characters. For example, if the "5" key is pressed twice within the time-out period, a "K" might be entered. If the "5" key is pressed once and is not pressed again before the time-out period expires, a "J" might be entered. Pressing "5" again after the time-out period has expired might enter another "J".

Entering text in this manner can be difficult to learn and error prone. If a user becomes distracted or otherwise inadvertently fails to enter a key press within the time-out period, an erroneous character might be entered. A user might also inadvertently enter an erroneous character by losing count of how many times a key has been pressed. A user might also inadvertently press a key too many times. In any of these cases, the user would typically need to delete the erroneous character and restart the data entry process.

The use of the touch-sensitive keypad 5 can reduce the number of errors that might occur in data entry for text messaging since users can easily determine how many times a particular one of the keys 10 has been pressed. In an embodiment, the completion of data entry for a particular one of the keys 10 is indicated by the removal of contact from the key 10 rather than by the expiration of a time-out period. For example, if a user touches the "5" key, the characters "J", "K", "L", and "5" might appear on the screen 70 of the text messaging device 50. If the user presses the "5" key once and maintains contact with the "5" key, the "J" might be highlighted or otherwise emphasized to indicate that "J" will be entered if no further key presses are made. A second press of the "5" key without removal of contact might highlight the "K". If the user then breaks contact with the "5" key, the "K" would be entered.

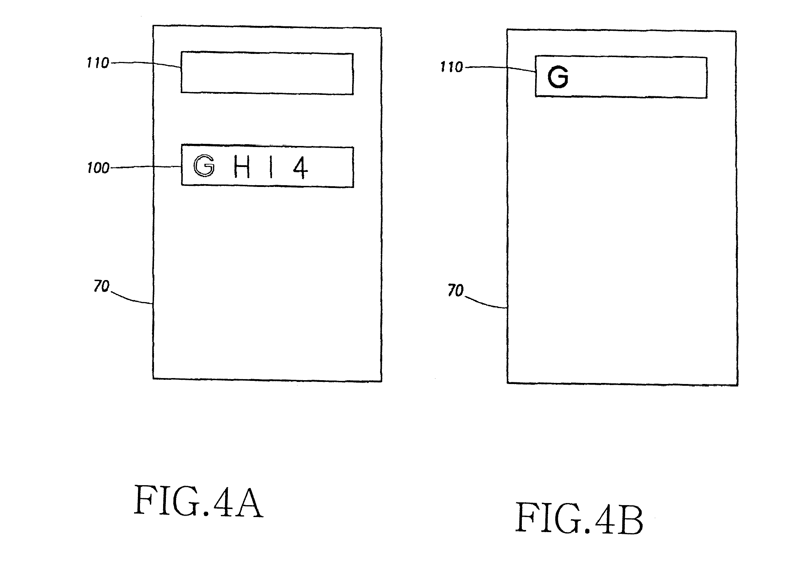

Figure 4a illustrates an embodiment of the display screen 70 on the device 50 equipped with the touch-sensitive keypad 5. In this case, a user is touching, but has not pressed, the "4" key on the keypad 5. As a result, the list of characters associated with the "4" key (namely "G", "H", "I", and "4") appears in a text box or similar first portion 100 of the screen 70. This clearly indicates to the user the characters that can be entered if the key 10 being touched is pressed and how many presses are needed to enter those characters. (One press for the first character, two presses for the second, etc.).

If the user presses the "4" key once and retains contact with the "4" key, the "G" might be highlighted or otherwise emphasized to indicate that a "G" will be entered if contact is removed from the "4" key. If the user again presses and retains contact with the "4" key, the "H" might be highlighted. Further presses might cause the highlighting to loop through the "G", "H", "I", and "4" characters.

If the user removes contact with the key 10 being touched, the screen 70 might then take on the appearance shown in Figure 4b. In this case, the user has pressed the "4" key once and then removed contact from the "4" key. A "G" appears in a text window or similar second portion 110 of the screen 70 to indicate that a "G" has been entered. The list of characters in the first portion 100 of the screen 70 has disappeared, indicating that no keys 10 are being touched.

As the user continues to touch and press other keys 10, other lists of characters indicating the key 10 currently being touched might appear in the first portion 100 of the screen 70 and the group of all characters that have been entered might appear in the second portion 110 of the screen 70 in the order in which they were entered. The second portion 110 of the screen 70 might change size, allow scrolling, or in some other way accommodate the entry of large strings of text. The first portion 100 of the screen 70 might automatically move to accommodate a change in the size of the second portion 110 of the screen 70 and prevent the first portion 100 from covering the second portion 110. In other embodiments, other types of displays might be used to indicate which characters have been entered and which characters can be entered if the key 10 being touched is pressed. In this way, the user need not be concerned about pressing a key 10 before the time-out period expires or about keeping track of how many times a key 10 has been pressed. As long as contact is maintained with a key 10, the user can easily see which character will be entered when contact is removed from the key 10.

In other embodiments, entry of a character might occur in different manners. For example, a character corresponding to a first key 10a might be entered when a second key 10b is touched, rather than when contact is released from the first key 10a. Alternatively, a traditional time-out period might be used in conjunction with touch-sensitive keys 10 such that entry of a character might occur after contact has been maintained on a key 10 for a certain length of time or entry of a character might occur a certain length of time after contact is released from a touch-sensitive key 10. One of skill in the art will recognize other ways in which a character might be entered into a device 50 after being selected for entry via touching a touch sensitive key 10 and/or a combination of touching and/or pressing a touch sensitive key 10.

In an embodiment, the device 50 might be used for both traditional telephony and text messaging. When the device 50 is in the traditional telephony mode, touching a particular one of the keys 10 might cause the numeral that appears on the touched key 10 to appear on the display 70 of the device 50. When the device 50 is in the text messaging mode, touching a key 10 might cause all of the characters that can be entered by pressing the touched key 10 to appear on the screen 70 of the device 50. Thus, the software module 60 or other component might include the logic to make such context-related input decisions or interpretations.

### TOUCH-SENSITIVE SCROLLING

Moving rapidly through a document or list can be difficult with previous handheld devices since such devices typically do not include a mouse, scroll bar, or other scrolling mechanism. Rapid movement is typically accomplished through rapid, repeated pressing of a key associated with an arrow, which can be tedious, error prone, and time-consuming. If the user presses the keys too quickly, keystrokes can be missed due to the tolerances of the software that accepts the keystrokes or delays in movement can occur due to buffers filling up and temporarily being unable to accept further keystrokes.

Previously, such rapid movement through the display on a handheld device might be carried out through the use of a "5-way keypad". A typical 5-way keypad contains a left key, a right key, an up key, a down key, and an OK key in the center of the other four keys. Rapid movement to the left might be accomplished by repeated pressing of the left key, rapid movement to the right might be accomplished by repeated pressing of the right key, etc.

In an embodiment, a scrolling capability is provided on a handheld device by making the keys on a 5-way keypad touch sensitive. Touch sensitivity can be provided to the keys on a 5-way keypad through the use of an underlying capacitive touch-sensitive PCB similar to that described above or through other technologies mentioned above. Scrolling is achieved through the, rapid, successive touching, but not pressing, of at least two adjacent touch-sensitive keys on a 5-way keypad such as running or rubbing one's fingers across the keys several times in quick succession. In one embodiment, running one's finger across or touching across any two adjacent keys can produce scrolling. In another embodiment, three aligned keys need to be touched across to achieve scrolling.

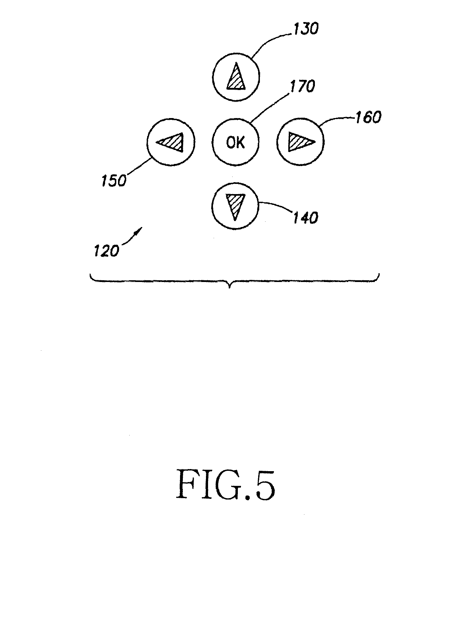

Figure 5 illustrates an embodiment of a touch-sensitive 5-way keypad 120, where an up key 130, a down key 140, a left key 150, and a right key 160 encircle an OK key 170. Such a touch-sensitive 5-way keypad 120 might be installed on the device 50 that also contains a touch-sensitive keypad 5, on a device with a traditional keypad, or on other devices. In an embodiment, touching the up 130, OK 170, and down 140 keys in rapid succession, such as running one's finger over those keys 130, 170, and 140 in a quick down stroke, is interpreted as a down scroll. Similarly, touching the down 140, OK 170, and up 130 keys in succession, such as an up stroke across those keys 140, 170, and 130, is interpreted as an up scroll. Touching the left 150, OK 170, and right 160 keys in rapid succession is interpreted as a right scroll. Touching the right 160, OK 170, and left 150 keys in rapid succession is interpreted as a left scroll.

In another embodiment, touching the left 150 and OK 170 keys or the OK 170 and right 160 keys in rapid succession is interpreted as a right scroll, touching the right 160 and OK 170 keys or the OK 170 and left 150 keys in rapid succession is interpreted as a left scroll, etc. In other embodiments, a diagonal scrolling can be achieved by touching diagonally aligned keys. Also, in other embodiments, other keys could be touched in a similar manner to produce a scrolling effect. For example, the "2", "4", "5", "6", and "8" keys on a telephone keypad, which are arranged in the same pattern as a 5-way keypad, can be used to achieve the scrolling effect when those keys are touch sensitive and are used for directional navigation.

When rapid contact is made across adjacent keys in a 5-way keypad 120 or on similar keys, a corresponding motion occurs in a scrollable portion of the display of a handheld device. For example, an up or down movement across the keys might cause an up or down scrolling through a document or a menu. Rapid movement across the keys might alternatively cause motion in a scroll bar that appears in the display of the device. Alternatively, rapid motion across the keys might cause the movement of a cursor or other pointer in the display. One of skill in the art will recognize other types of movement in a display that could be caused by rapid motion across a set of touch-sensitive keys.

In an embodiment, the software module 60 in the device 50 in which the touch-sensitive 5-way keypad 120 is present is capable of interpreting successive touches on three aligned keys as a scroll in the appropriate direction on a user interface. In other embodiments, a software component other than the software module 60 might control scrolling. The software module 60 or other software component can interpret the speed of the motion across the aligned keys as the speed at which scrolling occurs. That is, a rapid motion across the keys on a touch-sensitive 5-way keypad 120 causes a rapid scroll while a slower motion across the keys causes a slower scroll. There might be a lower limit to the speed of the motion across the keys such that moving across the keys slower than this limit is interpreted as discrete touches of the individual keys rather than as scrolling.

Scrolling in this manner can be faster and less error prone than the repeated pressing of arrow keys. The software that interprets successive touches on three aligned keys as a scroll can be designed to handle rapid movement without missing any touches or allowing buffers to overload. In this way, the handheld device 50 is enabled with a scrolling capability similar to that available with a mouse on a computer.

### CAMERA WITH A TOUCH SENSITIVE KEYPAD

Some mobile telephones and other handheld devices have a built-in camera. On most such devices, the OK key in a 5-way keypad acts as a shutter button so that pressing the OK key causes a photograph to be taken. On other devices pressing other buttons might cause a photograph to be taken. Any button on a handheld device that causes a photograph to be taken will be referred to herein as a shutter button.

In an embodiment, the handheld device 50 is equipped with a camera 75 (see Fig. 2) and the shutter button on the device 50 is made touch sensitive by an underlying capacitive touch-sensitive PCB or by other technologies. This touch sensitivity can allow an input signal to be sent to the device 50 when a user touches the shutter button but does not press the shutter button. The device 50 can interpret this input signal in several different manners. In one embodiment, touching the shutter button causes the collection of focus and/or flash data. Pressing the shutter button takes a photograph that makes use of this focus and flash data. In other embodiments, other data could be collected when the shutter button is touched.

Other photography-related adjustments could be made by means of touch-sensitive keys. For example, when the handheld device 50 is in a photography mode, icons might appear on the screen 70 of the device 50 that allow for the adjustment of zoom, brightness, and other parameters. In an embodiment, a left/right scrolling motion, as described above, might be used to select one of these icons and selection of an icon might cause a scroll bar to appear on the screen 70. An up/down scrolling motion might then be used to adjust the scroll bar and thereby adjust the parameter related to the selected icon. Other ways in which touch-sensitive keys can be used for photography-related adjustments will be apparent to one of skill in the art.

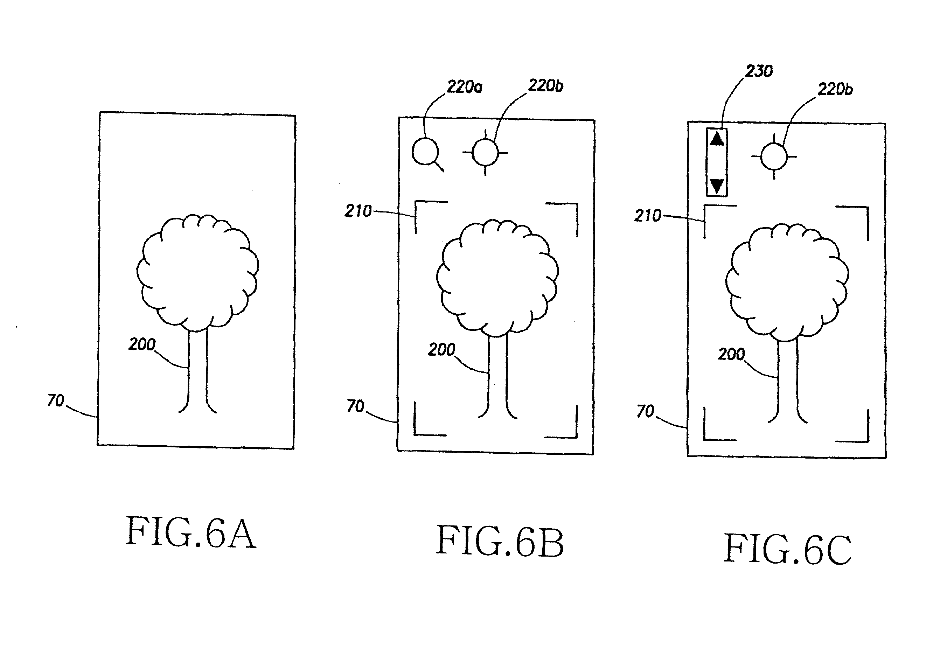

Figure 6 illustrates the display 70 of the handheld device 50 equipped with the built-in camera 75. In this case, the display 70 acts as a viewfinder for the camera 75. In Figure 6a, the shutter button on the device 50 is in the neutral (untouched) state. An object 200 at which the camera 75 is pointed appears in the display 70 but no photography-related symbols are seen. In Figure 6b, the shutter button is in the touched state. A frame 210 appears around the object 200 to indicate the field of a photograph or to assist with centering. A group of icons 220 also appears in the display 70. In other embodiments, other symbols might appear when the shutter button is touched. Also, in other embodiments, the icons 220 might appear in a smaller size when the shutter button is in the neutral state and might appear in a larger size when the shutter button is in the touched state.

The icons 220 can be used to make photography-related adjustments. For example, a first icon 220a might be used to adjust zoom and a second icon 220b might be used to adjust brightness. Other icons could be used to make other adjustments such as manual focusing and contrast, as examples. A user might select one of the icons 220 by touching appropriate keys in a 5-way keypad or other keys on the device 50. Figure 6c depicts the display 70 when the first icon 220a has been selected. The first icon 220a has been transformed into a scroll bar 230, which can be used to adjust the parameter associated with the first icon 220a. Selection of a different icon 220 would cause that icon 220 to transform into a scroll bar. By touching or pressing the appropriate keys on a keypad, the user can adjust the scroll bar 230 and thereby adjust a photography-related parameter. When all desired adjustments have been made, the user can press the shutter button and take a photograph that makes use of the adjustments.

Adjustments might be made in a similar manner on other types of devices. For example, icons might appear on the screen of a portable music player that allow the user to adjust volume, select songs, and perform other music-related activities. The icons might transform into scroll bars as described above to allow the adjustments to be made.

### MOBILE DEVICE HAVING A KEYPAD WITH DIRECTIONAL CONTROLS

The keypads on some prior handheld devices contain a large number of keys and each key might provide a single function. This profusion of keys can cause confusion for some users and might result in some functions never being used due to the user's lack of awareness of their existence. In an embodiment, the number of keys on the device 50 can be reduced by making the keys touch sensitive and/or by combining multiple functions into a single key. In one embodiment, functions that were previously performed by several different keys can be combined into a single touch-sensitive key 10. Touching such a multifunction key 10 can cause the screen 70 of the handheld device 50 to display the functions that are available through that key 10. The user might then press the key 10 one or more times to select a desired function.

As an example, a previous handheld device might have one key that performs a "dial" function, another key that performs a "retrieve message" function, and another key that enters the number "4". In an embodiment, all of these functions might be accessible through a single key 10, the "4" key for example. By combining functions that were previously performed by three different keys into a single key 10, two keys can be eliminated from the keypad of a handheld device 50. When a user touches the "4" key, the numeral "4", a "dial" option, and a "retrieve message" option might appear on the screen 70 of the device 50. The user might then press the "4" key one time to enter the number "4", two times to access the "dial" function, and three times to access the "retrieve message" function. In other embodiments, the user might select a desired function in different manners. Alternatively, the software module 60 might determine the function to be selected based on an interpretation of the state or context of the device 50. For example, if a call is coming in to the device 50, pressing a key that has an "answer" function might accept the call. Other functions that might be available through that key might be ignored or suppressed while a call is coming in.

In another embodiment, direction control keys such as those in a 5-way keypad are combined with the standard keys on a telephone keypad. The keys include various combinations of numeric indicia, alphanumeric indicia, directional control and function key icons and/or symbols. This is illustrated in Figure 2, where an "up" key is combined with the "2" key, a "down" key is combined with the "8" key, a "left" key is combined with the "4" key, a "right" key is combined with the "6" key, and an "OK" key is combined with the "5" key, and these keys include letters as well. In other embodiments, the direction keys could be shifted down one key such that the "up" key is combined with the "5" key, the "down" key is combined with the "0" key, etc. Combining direction keys with standard keys in this manner can allow a 5-way keypad to be eliminated from a handheld device.

In addition, common telephone-related function keys might be combined with the standard keys on a telephone keypad. For example, functions such as "send", "end", "clear", "redial", "select", and others typically found on a mobile telephone might be accessible via the number keys on a handheld device.

In an embodiment, the software module 60 or a similar component on the handheld device 50 is capable of determining which of the functions accessible through a single key 10 will be implemented when that key 10 is pressed. The determination is based on the context in which the key 10 is pressed. That is, the action that is carried out when a key 10 is pressed might depend on the state of the user interface in the display 70 at the time the key 10 is pressed.

As an example, a "send" function might be used to answer an incoming call or to place an outgoing call. This function might be accessible through the "4" key, which might also be used to enter a "4" or to cause a movement to the left. An "end" function might be used to terminate a call and this function might be accessible through the "6" key, which might also be used to enter a "6" or to cause a movement to the right.

When a call comes in to the device 50, a user might press the "4" key to accept the call. The software module 60 can interpret the pressing of the "4" key as a signal to accept the call based on the context of the current incoming call. If a call were not currently coming in to the device 50, the software module 60 might interpret the pressing of the "4" key based on the state of the user interface in the display 70. That is, if the user were performing a numeric function, such as entering a telephone number, the software module 60 might interpret the pressing of the "4" key as the entry of a "4". If the user were navigating through a list or a document, the software module 60 might interpret the pressing of the "4" key as a movement to the left.

The number of functions that are available on a single key 10 can vary in different embodiments. In some cases, functions that are accessed frequently might be accessible through a single, dedicated key 10 while less frequently used functions might be combined into a single key 10. In some embodiments, a user might be given the capability to specify the functions that are available through each key 10.

Combining multiple functions in a single key 10 in this manner can simplify the layout of a keypad. A small number of touch-sensitive keys 10 can be used to perform functions that might previously have required a greater number of traditional keys. The reduction in the number of keys 10 can allow a keypad to fit into a smaller space than was previously possible, which can be especially desirable as handheld devices 50 become smaller and smaller. Alternatively, the keypad could remain the same size be enlarged since reducing the number of keys 10 could allow each key 10 to be larger. This could aid users with visual impairments or users, such as children or the elderly, who lack the dexterity to comfortably manipulate smaller keys.

### AUDIO USER INTERFACE

The use of a touch-sensitive keypad 5 can assist visually impaired users in entering the appropriate characters into a handheld device 50. In an embodiment, when a user touches a touch-sensitive key 10, the device 50 in which the touch-sensitive keypad 5 is present can audibly speak the character or characters that will be entered if that key 10 is pressed. For example, if a user touches the "5" key, an electronic voice might pronounce the word "five". If the user intended to enter a "5", the user could then press the key 10 that was being touched. If the user intended to enter a different number (or to access a function or service not associated with the "5" key), the user could touch other keys 10 until a spoken word corresponding to the number desired for entry was heard. The user could then press the key 10 currently being touched. In this way, a visually impaired user can explore a keypad 5 by feel and, by hearing which key 10 is being touched, can be certain before the pressing actually occurs that the correct key 10 will be pressed. This feature might be helpful when the keys 10 are not large enough to accommodate Braille symbols that represent all of the functions available through a key 10. This feature might also be helpful when a non-visually impaired user is driving or otherwise cannot devote full attention to looking at a keypad 5 or a display screen 70.

### OTHER APPLICATIONS

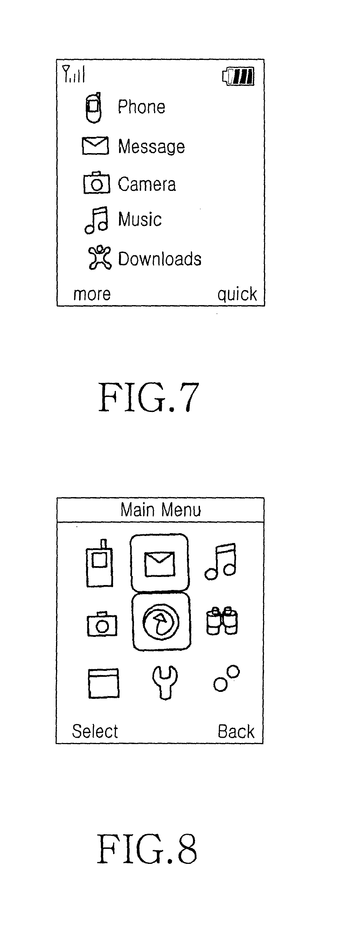

Figure 7 depicts a menu that might appear on the display screen 70 of the device 50 equipped with touch-sensitive keys 10. Each item in the menu might be associated with a particular one of the touch-sensitive keys 10 or might be selectable via scrolling. In an embodiment, an icon that appears in such a menu might become larger when a key 10 associated with the icon is touched. The text associated with the icon might also become larger. If the key 10 is pressed, the function associated with the icon might be selected. The enlargement of an icon might provide a user with a clearer idea of the function that will be performed if the key 10 associated with the icon is pressed.

An alternative display of menu items is illustrated in Figure 8, where a group of icons is arranged in a grid-like pattern. Each rectangle in the grid might be associated with a key 10 in a corresponding location on a keypad. That is, the rectangle in the upper left corner of the grid might be associated with the "1" key on a keypad, the rectangle in the upper middle portion of the grid might be associated with the "2" key, etc. Touching a key 10 might cause the associated icon to become larger or to otherwise provide an indication of the function associated with the icon.

In either of the above menu configurations, a user may be given the capability to designate one or more icons to represent one or more favorite functions. This can allow the user to gain access to a function in fewer steps than would otherwise be necessary. A scrolling action as described above might be used to select a "favorites" icon and/or to select a favorite function from a group of favorite functions. As an example, a user might choose to store emergency contact information under a single icon or menu item so that access to this information can easily be gained in case of an emergency. In another embodiment, a wireless communications company might wish to store revenue generating functions under a "favorites" icon and display such an icon prominently on its mobile telephones. According to another embodiment, the present disclosure provides icons that are more readily identifiable. The icons listed in Figures 7 and 8 are examples of such icons that a user will readily identify as associated with a particular service or feature without requiring the associated textual description.

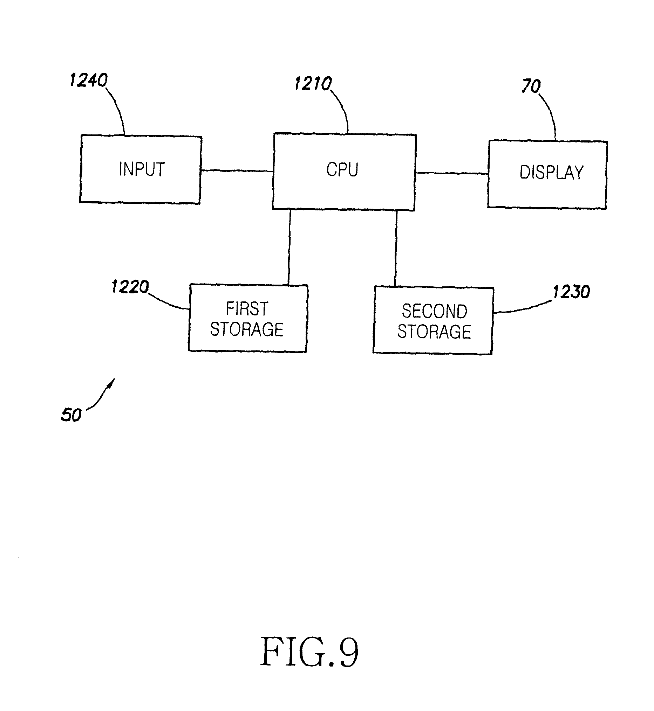

The system described above may be implemented on any handheld mobile electronic device 50 such as is well known to those skilled in the art. An exemplary mobile handset system 50 for implementing one or more embodiments disclosed herein is illustrated in Figure 9. The mobile handset 50 includes a processor 1210 (which may be referred to as a central processor unit or CPU) that is coupled to a first storage area 1220, a second storage area 1230, an input device 1240 such as a keypad, and an output device such as a display screen 70.

The processor 1210 may be implemented as one or more CPU chips and may execute instructions, codes, computer programs, or scripts that it accesses from the first storage area 1220 or the second storage area 1230. The first storage area 1220 might be a non-volatile memory such as flash memory. The second storage area 1230 might be firmware or a similar type of memory.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein, but may be modified within the scope of the appended claims along with their full scope of equivalents. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as directly coupled or communicating with each other may be coupled through some interface or device, such that the items may no longer be considered directly coupled to each other but may still be indirectly coupled and in communication, whether electrically, mechanically, or otherwise with one another. Other examples of changes, substitutions, and alterations are ascertainable by one skilled in the art and could be made without departing from the scope disclosed herein.

## Claims

1. A mobile handset (50) having a camera (75), the mobile handset comprising:
a touch-sensitive keypad having a plurality of keys (10, 20);
a first component (220, 220a) operable in response to one of the keys being touched to provide a first response related to using the camera; and
a second component (220, 220b) operable in response to one of the keys being pressed to provide a second response related to using the camera.

2. The mobile handset of claim 1, wherein touching one of the keys includes a user contacting one of the keys in a non-pressing manner, and wherein pressing one of the keys includes pressing in a manner as to exert downward force on one of the keys.

3. The mobile handset of claim 1, wherein touching a first key of the plurality of keys frames (210) a subject to be photographed.

4. The mobile handset of claim 3, wherein touching the first key focuses the camera on the subject.

5. The mobile handset of claim 3, wherein pressing the first key takes a picture of the subject.

6. The mobile handset of claim 4, wherein pressing the first key captures the image of the subject using the camera.

7. The mobile handset of claim 1, wherein touching one of the keys selects a photography settings.

8. The mobile handset of claim 7, wherein the photography settings include a zoom setting, a contrast setting, and a brightness setting.

9. The mobile handset of claim 1, wherein a graphical user interface on the mobile handset provides minimized icons (220) related to a plurality of photography settings including a zoom option, a contrast option, and a brightness option, such that touching some of the keys maximizes at least one of the photography settings, and wherein pressing at least some of the keys promotes adjustment of one or more of the photography settings.

10. The mobile handset of claim 1, wherein the touch-sensitive keypad includes:
a capacitive touch-sensitive printed circuit board (20), PCB, positioned adjacent the plurality of keys (10, 20) and operable to detect when one of the plurality of keys has been touched;
an actuator plate (30) positioned adjacent the capacitive touch-sensitive PCB (20); and
a contact printed circuit board (40), PCB, provided adjacent the actuator plate (30), such that the actuator plate in response to one or more of the keys being pressed engages the contact PCB.

11. A method of photography using a mobile handset (50) having a camera (75), the method comprising:
viewing a subject to photograph on a display (70) of the mobile handset;
touching a key (10, 120) on the mobile handset to prepare the image for photographing; and
pressing the key to photograph the subject.

12. The method of claim 11, wherein preparing the image for photographing includes framing the image.

13. The method of claim 11, wherein preparing the image for photographing includes focusing the image.

14. The method of claim 11, wherein the key (120) is the "ok" key (170) of a 5-way control set of keys.

15. The method of claim 14, further comprising:
touching a second key to maximize a minimized camera setting icon; and
pressing the second key to adjust the camera setting associated with the camera setting icon.

16. The method of claim 15, further comprising:
touching a third key to maximize a second minimized camera setting icon; and
pressing the third key to adjust the camera setting associated with the second camera setting icon.

17. The method of claim 16, wherein the camera settings include a zoom setting, a contrast setting, and a brightness setting.

18. A mobile device having a camera and a keypad with keys having three (3) states, the mobile device comprising:
a plurality of keys (10, 120) provided in a first neutral state;
a touch-sensitive component (20) operable to detect a second state when one or more of the plurality of keys has been touched;
a press detection component (40) operable to detect a third state when the one or more of the plurality of keys has been pressed;
a component operable in response to one of the keys (10, 120) being in a second state to provide a first response related to using the camera, the component operable in response to one of the keys being in a third state to provide a second response related to using the camera.

19. The mobile device of claim 18, further comprising;
a display (70); and
a user interface provided on the display including a plurality of minimized icons associated with camera settings such that when some of the plurality of keys associated with the icons are in the second state the user interface maximizes the icons, and further such that when the some of the plurality of keys are in the third state the camera settings associated with the maximized icon are adjusted.

20. The mobile device of claim 18, wherein the camera (75) focuses on a subject when one of the plurality of keys is in the second state, and wherein the camera captures an photograph of the subject when the one of the plurality of keys is in the third state.
